# EUROPEAN PATENT APPLICATION

(11) **EP 4 717 593 A1**
(43) Date of publication of application: **01.04.2026**
(21) Application number: 25194123.3
(22) Date of filing: 05.08.2025
(51) Int. Cl.: B64C 11/26

(54) **GAS TURBINE ENGINE WITH AIRFOIL HAVING DISENGAGEMENT FEATURE**

(30) Priority: 26.09.2024 US 202418897454
(71) Applicant: General Electric Company, Cincinnati, Ohio 45215 (US)
(72) Inventor: YADAV, Abhijeet Jayshingrao, Evendale, 45215 (US); JAIN, Nitesh, Evendale, 45215 (US); KRAY, Nicholas Joseph, Evendale, 45215 (US)
(74) Representative: Openshaw & Co.

(57) **Abstract**

A gas turbine engine including a fan section, a compressor section, combustion section. An airfoil is provided in one of the fan section, the compressor section, or the turbine section, and includes an outer wall defining an interior. A first portion is positioned within the interior and at least one disengagement feature is positioned within the first portion to disengage or separate within the first portion in response to a force exceeding a predetermined threshold.

## Description

### TECHNICAL FIELD

The present disclosure relates generally to an airfoil for a gas turbine engine, and to components of the gas turbine engine including an airfoil.

### BACKGROUND

A turbine engine typically includes an engine core with a compressor section, a combustor section, and a turbine section in serial flow arrangement. A fan section can be provided upstream of the compressor section. The compressor section compresses air which is channeled to the combustor section where it is mixed with fuel and the mixture is then ignited for generating hot combustion gases. The combustion gases are channeled to the turbine section which extracts energy from the combustion gases for powering the compressor section, as well as for producing useful work to propel an aircraft in flight or to power a load, such as an electrical generator.

Composite materials typically include a fiber-reinforced matrix and exhibit a high strength to weight ratio. Due to the high strength to weight ratio and moldability to adopt relatively complex shapes, composite materials are utilized in various applications, such as a turbine engine or an aircraft. Composite materials can be, for example, installed on or define a portion of the fuselage and/or wings, rudder, manifold, airfoil, or other components of the aircraft or turbine engine.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic section view of a turbine engine, in accordance with the aspects described herein.
FIG. 2 is a schematic perspective view of an airfoil assembly suitable for use within the turbine engine of FIG. 1, in accordance with the aspects described herein.
FIG. 3 is a span-wise, section view of the airfoil of FIG. 2, showing an interior including disengagement features, in accordance with the aspects described herein.
FIG. 4 is a chord-wise section view of the airfoil of FIG. 3 taken along section IV-IV, illustrating the arrangement and position of the disengagement features in a chord-wise plane, in accordance with the aspects described herein.
FIG. 5 is a span-wise section view of an airfoil having a first portion, and a second portion including disengagement features and coupled to a shank, in accordance with the aspects described herein.
FIG. 6 is a chord-wise section view of the airfoil of FIG. 5, taken along section VI-VI, showing a disengagement feature arranged within the second portion, in accordance with the aspects described herein.
FIG. 7 is a chord-wise section view of the airfoil of FIG. 5, taken along section VII-VII, showing disengagement features extending fully and partially between a pressure side and a suction side of a skin layer, in accordance with the aspects described herein.
FIG. 8 is span-wise section view of an airfoil showing disengagement features as a set of angled strips, as sets of filled and open apertures, and as a span-wise strip, in accordance with the aspects described herein.
FIG. 9 is a section view of the airfoil of FIG. 8 taken along section IX-IX, the section view being aligned with one angled strip of the set of angled strips, in accordance with the aspects described herein.
FIG. 10 is a span-wise section view of an airfoil showing disengagement features as chord-wise strips and chord-wise pairs of apertures arranged within a radially-outer first portion, in accordance with the aspects described herein.
FIG. 11 is a chord-wise section view of the airfoil of FIG. 10, taken along section XI-XI, showing the disengagement features as the chord-wise pairs of apertures, as well as additional apertures extending partially between a pressure side and a suction side, in accordance with the aspects described herein.

### DESCRIPTION OF EMBODIMENTS

The described embodiments of the present disclosure are directed to a composite component, and particularly as a composite airfoil for a turbine engine. For purposes of illustration, the present disclosure will be described with respect to an airfoil for an aircraft turbine engine. It will be understood, however, that the disclosure is not so limited and may have general applicability, such as in non-aircraft applications or non-turbine engine applications, other airfoil-based applications, or component applications, such as other mobile applications and non-mobile industrial, commercial, and residential applications, or in applications where composite components or disengagement features can be utilized.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine or being relatively closer to the engine outlet as compared to another component.

As used herein, "a set" can include any number of the respectively described elements, including only one element. Additionally, the terms "radial" or "radially" as used herein refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

As used herein, "span-wise" or a "span-wise direction" can be a direction extending span-wise between a tip and a root of an airfoil structure. As used herein, "chord-wise" or a "chord-wise direction" can be a section view that is taken extending in a direction between a leading edge and a trailing edge of an airfoil structure.

As used herein, a "disengagement feature" or "disengagement features" can include features formed, provided, or otherwise defined within a body intended to disengage or separate a portion of the body from the remainder of the body in an intended manner, where such an intended manner can be at one or more of a threshold force, in a predetermined direction, or at a predetermined position, area, or volume.

The term "composite," as used herein is indicative of a component having two or more materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, a polymeric resin, a thermoplastic resin, bismaleimide (BMI) materials, polyimide materials, an epoxy resin, glass fibers, and silicon matrix materials.

As used herein, a "composite" component refers to a structure or a component including any suitable composite material. Composite components, such as a composite airfoil, can include several layers or plies of composite material. The layers or plies can vary in stiffness, material, and dimension to achieve the composite component or composite portion of a component having a predetermined weight, size, stiffness, and strength.

One or more layers of adhesive can be used in forming or coupling composite components. Adhesives can include resin and phenolics, wherein the adhesive can use curing at elevated temperatures or other hardening techniques.

As used herein, PMC refers to a class of materials. By way of example, the PMC material is defined in part by a prepreg, which is a reinforcement material preimpregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of non-limiting example electrostatically, and then adhered to the fiber, by way of non-limiting example, in an oven or with the assistance of heated rollers. The prepregs can be in the form of unidirectional tapes or woven fabrics, which are then stacked on top of one another to create the number of stacked plies for formation of the part.

Multiple layers of prepreg are stacked to the proper thickness and orientation for the composite component and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific example of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg, in another non-limiting example, with the use of thermoplastic polymers, it is possible to utilize a woven fabric. Woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers can be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers or matrix material to a mold or cavity. The dry fibers or matrix material can include prepreg, braided material, woven material, or any combination thereof.

Resin can be pumped into or otherwise provided to the mold or cavity to impregnate the dry fibers or matrix material. The combination of the impregnated fibers or matrix material and the resin are then cured and removed from the mold. When removed from the mold, the composite component can undergo post-curing processing.

It is contemplated that RTM can be a vacuum assisted process. That is, the air from the cavity or mold can be removed and replaced by the resin prior to heating or curing. It is further contemplated that the placement of the dry fibers or matrix material can be manual or automated.

The dry fibers or matrix material can be contoured to shape the composite component or direct the resin. Optionally, additional layers or reinforcing layers of a material differing from the dry fiber or matrix material can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a predetermined chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

The term "metallic" as used herein is indicative of a material that includes metal such as, but not limited to, titanium, iron, aluminum, stainless steel, and nickel alloys. A metallic material or alloy can be a combination of at least two or more elements or materials, where at least one is a metal.

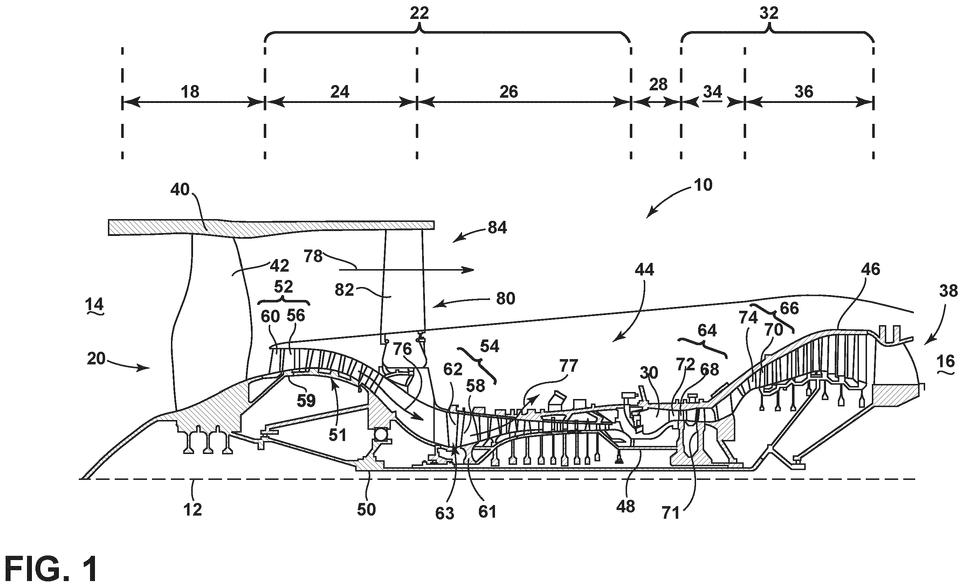

FIG. 1 is a schematic cross-sectional diagram of a gas turbine engine 10 for an aircraft. The gas turbine engine 10 has a generally longitudinally extending axis or centerline 12 extending from forward 14 to aft 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the gas turbine engine 10, which generates combustion gases. The core 44 is surrounded by a core casing 46, which can be coupled with the fan casing 40.

An HP shaft or spool 48 disposed coaxially about the centerline 12 of the gas turbine engine 10 drivingly connects the HP turbine 34 to the HP compressor 26. An LP shaft or spool 50, which is disposed coaxially about the centerline 12 of the gas turbine engine 10 within the larger diameter annular HP spool 48, drivingly connects the LP turbine 36 to the LP compressor 24 and fan 20. The spools 48, 50 are rotatable about the centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating compressor blades 56, 58. It is noted that the number of blades, vanes, and compressor stages shown in FIG. 1 were selected for illustrative purposes only, and that other numbers are possible.

The compressor blades 56, 58 for a stage of the LP and HP compressors 24, 26 can be mounted to (or integral to) a disk 61, which is mounted to the corresponding one of the HP and LP spools 48, 50. The static compressor vanes 60, 62 for a stage of the LP and HP compressors 24, 26 can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12 while the corresponding static turbine vanes 72, 74 are positioned upstream of and adjacent to the rotating turbine blades 68, 70. It is noted that the number of blades, vanes, and turbine stages shown in FIG. 1 were selected for illustrative purposes only, and that other numbers are possible.

The turbine blades 68, 70 for a stage of the HP and LP turbines 34, 36 can be mounted to a disk 71, which is mounted to the corresponding one of the HP and LP spools 48, 50. The static turbine vanes 72, 74 for a stage of the LP and HP compressors 24, 26 can be mounted to the core casing 46 in a circumferential arrangement.

Complementary to the rotor portion, the stationary portions of the gas turbine engine 10, such as the static compressor and turbine vanes 60, 62, 72, 74 among the compressor and turbine sections 22, 32 are also referred to individually or collectively as a stator 63. As such, the stator 63 can refer to the combination of non-rotating elements throughout the gas turbine engine 10.

In operation, the airflow exiting the fan section 18 is split such that a portion of the airflow is channeled into the LP compressor 24 as a pressurized airflow 76 to the HP compressor 26, which further pressurizes the air. The pressurized airflow 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the gas turbine engine 10 via the exhaust section 38. The driving of the LP turbine 36 drives the LP spool 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components for cooling. The temperature of pressurized airflow 76 entering the combustor 30 is significantly increased. As such, cooling provided by the bleed air 77 can be utilized for operating of such engine components in the heightened temperature environments.

A remaining portion of the airflow exiting the fan section 18, referred to as bypass airflow 78, bypasses the LP compressor 24 and core 44 and exits the gas turbine engine 10 through a stationary vane row, and more particularly an outlet guide vane assembly 80, comprising a plurality of airfoil guide vanes 82, at a fan exhaust side 84. More specifically, the airfoil guide vanes 82 are arranged in a circumferential row of radially extending airfoil guide vanes 82 that are utilized adjacent the fan section 18 to exert some directional control of the bypass airflow 78.

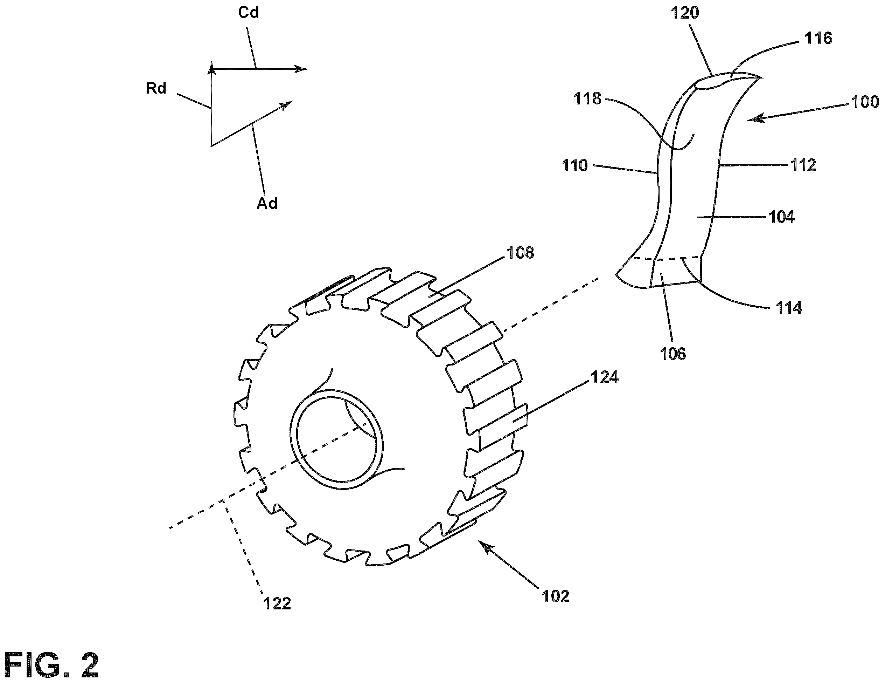

FIG. 2 is a schematic perspective view of an airfoil assembly 100 and a disk 102 suitable for use within the gas turbine engine 10 of FIG. 1. The disk 102 is suitable for use as the disk 61, 71 (FIG. 1) or any other disk such as, but not limited to, a disk within the fan section 18 (FIG. 1), the compressor section 22 (FIG. 1), or the turbine section 32 (FIG. 1) of the gas turbine engine 10 (FIG. 1). The airfoil assembly 100 can be rotating or non-rotating such that the airfoil assembly 100 can include at least one of the static compressor vanes 60, 62 (FIG. 1), the compressor blades 56, 58 (FIG. 1), the static turbine vanes 72, 74 (FIG. 1), the turbine blades 68, 70 (FIG. 1), or the plurality of fan blades 42 (FIG. 1). As a non-limiting example, the airfoil assembly 100 can be a composite airfoil, such as a composite fan blade, or made at least partially of composite materials.

The airfoil assembly 100 includes an airfoil 104 coupled to or integrally formed with a mount or shank 106. The airfoil 104 extends between a leading edge 110 and a trailing edge 112 to define a chord-wise direction, extends between a root 114 and a tip 116 to define a span-wise direction, and includes a pressure side 118 and a suction side 120.

The disk 102 can be rotatable or stationary about a rotational axis 122. The rotational axis 122 can coincide with, be parallel to, or be offset from the centerline 12 (FIG. 1). The disk 102 includes a plurality of slots 108 extending axially through a radially exterior surface 124 of the disk 102. The plurality of slots 108 are circumferentially spaced about the disk 102, with respect to the rotational axis 122, and permit the airfoil assembly 100 to slidably secure to the disk 102 at the shank 106.

The airfoil assembly 100 couples to the disk 102 by inserting at least a portion of the airfoil assembly 100, such as the shank 106, into a respective slot 108 of the plurality of slots 108. The airfoil assembly 100 can couple to the slot 108 via any suitable coupling method such as, but not limited to, welding, adhesion, fastening, or the like. While only a single airfoil assembly 100 is illustrated, it will be appreciated that there can be any number of one or more airfoil assemblies 100 coupled to the disk 102. As a non-limiting example, there can be a plurality of airfoil assemblies 100 corresponding to a total number of slots of the plurality of slots 108.

For the sake of reference, a set of relative reference directions, along with a coordinate system can be applied to the airfoil assembly 100 and the disk 102. An axial direction (Ad) can extend from forward to aft and is shown extending at least partially into the page. The axial direction (Ad) can be arranged parallel to the rotational axis 122, which can also be arranged parallel to the centerline 12 (FIG. 1). A radial direction (Rd) extends perpendicular to the axial direction (Ad), which can extend perpendicular to the centerline 12 (FIG. 1). A circumferential direction (Cd) can be defined perpendicular to the radial direction (Rd), which can be defined along a curvature of a circumference about the axial direction (Ad), can be defined as a ray extending locally from the radial direction (Rd), and/or can be defined along the circumference of the gas turbine engine 10 (FIG. 1) relative to the centerline 12 (FIG. 1) or rotational axis 122.

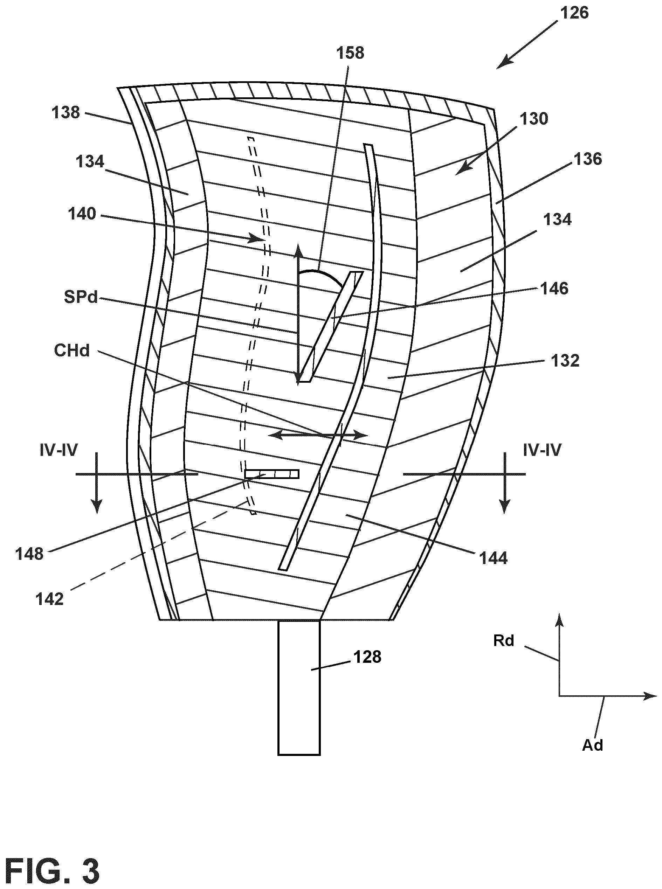

FIG. 3 shows a span-wise section view of an airfoil 126, which can be the airfoil 104 of FIG. 2, that includes an interior 130 defined within an outer wall 138. A first airfoil portion 132 and a second airfoil portion 134 are positioned within the interior 130. The first airfoil portion 132 can be a spar portion, for example, which can be a structural portion or spar coupled to and extending from a shank 128. It is further contemplated that the shank 128 can extend into the interior 130 to couple to the first airfoil portion 132. In a non-limiting example, the shank 128 can at least partially define a mount, such as the shank 106 of FIG. 2 for example, for coupling the airfoil 126 to a disk, like the disk 102 of FIG. 2. The second airfoil portion 134 is positioned within the interior 130 between the first airfoil portion 132 and a skin layer 136. In a non-limiting example, the skin layer 136 can form the outer wall 138 of the airfoil 126, while additional exterior materials, coatings, or layers are contemplated, including but not limited to exterior sealing or finishing layers, such as erosion or corrosion resistant layers, paint layers, UV or heat resistant layer, hydrophobic or ice-phobic layers, or combinations thereof.

The first airfoil portion 132 or the skin layer 136, or both, can be laminated, such as formed from a set of laminate plies stacked together. In a non-limiting example, the first airfoil portion 132 or the skin layer 136, or both, can be a composite portion, which can be made of one or more composite materials, and can be formed as a preform. Such composite materials can include foams or polymers, as well as adhesives or resins for bonding to adjacent materials. In another non-limiting example, the composite materials can be formed as a woven structure that can include a plurality of interlaced or interwoven fibers in two or three dimensions, or can be formed having a braided weave pattern. In yet another non-limiting example, the first airfoil portion 132 can be a composite comprised of chopped fibers, such as thermoplastics, resins, or other suitable materials as chopped fibers. In yet another non-limiting example, the first airfoil portion 132 can be a composite spar portion comprising composite materials suitable to couple the airfoil 126 to the shank 128.

The second airfoil portion 134 can have at least one disengagement feature having a disengagement property selected from at least one of a lesser density, a lesser mass, or both, than that of the first airfoil portion 132. The second airfoil portion 134 can made of a foam material or a polymer material, in non-limiting examples, including but not limited to, an open cell foam, a closed cell foam, fiber reinforced foams, metal foams, composite foams, metal matrix foams, resinous foams, vinyl foams, stochastic or regular foams, ceramic foams, microcellular foams, polymer foams, or polymers, or combinations thereof.

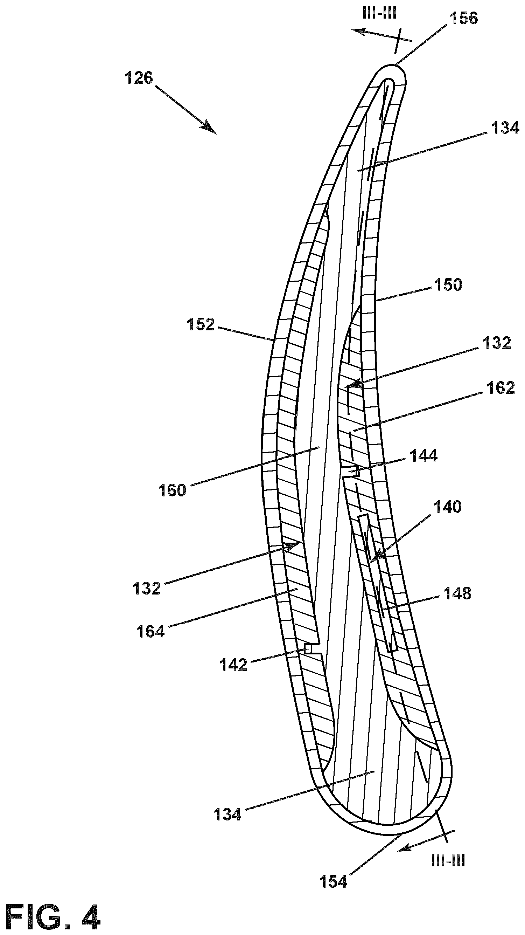

Disengagement features 140 are provided within the first airfoil portion 132. The disengagement features 140 include a first disengagement feature 142, a second disengagement feature 144, an angled disengagement feature 146, and a chord-wise disengagement feature 148. The first disengagement feature 142 is positioned interior of the first airfoil portion 132, and shown illustrated n broken line. The position of the first disengagement feature 142 can be further appreciated in FIG. 4. Still referring to FIG. 3, the first and second disengagement features 142, 144 include a curvilinear, cross-sectional shape extending in the span-wise direction (SPd). In a non-limiting example, the first and second disengagement features 142, 144 can be formed as a strip extending in the span-wise direction (SPd) and having a curvature. The curvature bends in the chord-wise (CHd) direction as it extends in the span-wise direction (SPd), as shown in FIG. 3, while any curvature, geometry, arrangement, or extent for the strip is contemplated. In a non-limiting example, the first and second disengagement features 142, 144 can be filled with the same material as the second airfoil portion 134. The first and second disengagement features 142, 144, or any of the disengagement features 140, can include a material having a disengagement property selected from at least one of a lesser density, a lesser mass, a lesser tensile strength, a greater brittleness, or a combination thereof, than the first airfoil portion 132, the second airfoil portion 134, or both. In non-limiting examples, the disengagement features 140 can comprise foam or a polymer, including but not limited to an open cell foam, a closed cell foam, fiber reinforced foams, metal foams, composite foams, metal matrix foams, resinous foams, vinyl foams, stochastic or regular foams, ceramic foams, microcellular foams, polymer foams, or combinations thereof. In another non-limiting example, the disengagement features 140 can be polymeric, such as a polymeric foam, which can include ethylene-vinyl acetate foams, polyethylene foams, or polypropylene foams in additional non-limiting examples. In yet another non-limiting example, the disengagement features 140 can be positioned at or radially exterior of 20% of the airfoil span, where the span is defined extending radially outward from root 114 to tip 116 (FIG. 2) in the span-wise direction (SPd). Stated another way, where the airfoil span is defined as 100% extending in the span-wise direction (SPd), extending from the root 114 at 0% and the tip 116 at 100%, the disengagement features 140 can be positioned greater than or equal to 20% span and less than or equal to 100% span.

The angled disengagement feature 146 and the chord-wise disengagement feature 148 can also be formed as a strip, similar to that of first and second disengagement features 142, 144, while having no curvature or being planar. In a non-limiting example, a planar strip can be aligned with one of the span-wise direction (SPd) or the chord-wise direction (CHd). The angled disengagement feature 146 and the chord-wise disengagement feature 148 can be filled with the same or a similar material as that of the first and second disengagement features 142, 144, which can include a foam material or polymeric foam, similar to that of the first airfoil portion 132, while no fill material is contemplated (e.g., the angled and chord-wise disengagement features 146, 148 can be provided as voids). The angled disengagement feature 146 can have an angled orientation, such as arranged at an angle 158 relative to the span-wise direction (SPd), the chord-wise direction (CHd), the radial direction (Rd), the axial direction (Ad), or combinations thereof, in non-limiting examples. The chord-wise disengagement feature 148 can be arranged parallel to the chord-wise direction (CHd), parallel to the axial direction (Ad), or both, for example. It contemplated that the disengagement features 140 can have various orientations or geometries within the first airfoil portion 132, including linear, curved, planar, or complex orientations or geometries in non-limiting examples.

FIG. 4 shows a chord-wise section view taken along section IV-IV of FIG. 3 that further illustrates the interior arrangement of the disengagement features 140 within the interior 130 of the airfoil 126. Section III-III, illustrated in broken line in FIG. 4, represents where the section of FIG. 3 is taken relative to the section shown in FIG. 4.

As can be appreciated, the first and second disengagement features 142, 144 can be unitary with the second airfoil portion 134, and can be made from the same material. Contact among the first and second disengagement features 142, 144 and the second airfoil portion 134 is contemplated, while some or all of the first disengagement feature 142, the second disengagement feature 144, or the second airfoil portion 134 can comprise one or more different materials.

The second airfoil portion 134, which appears separated by the first airfoil portion 132 in FIG. 3, can be connected by an intermediate airfoil portion 160. The first airfoil portion 132 can be separated into a pressure side portion 162 and a suction side portion 164, being spaced by the intermediate airfoil portion 160. The first disengagement feature 142 is arranged within the suction side portion 164, and the second disengagement feature 144 and the chord-wise disengagement feature 148 are arranged within the pressure side portion 162. It should be appreciated that one or more disengagement features 140 can be arranged at any position or arrangement within the first airfoil portion 132. Additionally, the first airfoil portion 132 or the second airfoil portion 134, or both, can be separated into multiple discrete portions, or can extend within the airfoil 126 having any arrangement or geometry.

In operation, the disengagement features 140 can cause at least some of the airfoil 126 to disengage or separate from itself at the disengagement features 140 when experiencing or exceeding a threshold force. Such a threshold force can be experienced during engine operation, including those forces outside of normal operation, such as the impact force of debris entering the gas turbine engine 10 (FIG. 1). The disengagement features 140, when experiencing such a force, facilitate the disengagement or separation in a predetermined manner at the threshold force. In a non-limiting example, such a threshold force can be defined as a force suitable to permit separation of the airfoil 126 at the disengagement feature 140. In another non-limiting example, the threshold force can be specific to each disengagement feature 140. More specifically, in order to permit separation of a section of the airfoil 126 from the remainder of the airfoil 126 at a particular disengagement feature 140, a threshold force can be defined that is sufficient to disengage or separate the section of the airfoil 126 from the remainder of the airfoil 126 at the particular disengagement feature 140, while remaining disengagement features 140 have a greater threshold force and are not disengaged or separated prior to those with a lesser threshold force.

More specifically, the shape, size, geometry, position, arrangement, or material forming or provided as the disengagement features 140 can be defined to disengage at the threshold force, prior to disengagement or separation among other sections of the airfoil 126. For example, a density of the disengagement features 140 can be less than a density of the first airfoil portion 132, the second airfoil portion 134, or both, where such a lesser density can disengage at a lesser force than sections having a relatively greater density. In additional non-limiting examples, the disengagement features 140 can include a lesser density, lesser mass, lesser tensile strength, greater brittleness, one or more other differing properties, or a combination thereof, than that of the first airfoil portion 132 to facilitate disengagement at the disengagement features 140 prior to disengagement or separation of other sections of the airfoil 126, such as sections of the first and second airfoil portions 132, 134 or skin layer 136 without the disengagement features 140.

Events during engine operation can result in forces imparted to the airfoil 126 that are beyond inherent threshold capabilities of the airfoil 126, or of the materials comprising the airfoil 126, such as from debris or foreign objects entering the gas turbine engine 10 (FIG. 1). During such an event, unintended impairment of sections of the components within the gas turbine engine 10 (FIG. 1) can result in a series of cascading events, which can increase in magnitude along such a series, resulting in increasing impact to the surrounding engine environment. **In** order to reduce the overall impact to the engine environment, control of the disengagement or separation of sections of the airfoil 126 can be at least partially achieved, where such controlled disengagement or separation results in less total engine impact, a decrease in magnitude, or even the halting or prevention of the series of cascading events to the surrounding engine environment. Such controlled disengagement or separation is achieved with the disengagement features 140. A first threshold force at which the disengagement features 140 disengage from the remainder of the airfoil 126 can be a force greater than those experienced by the airfoil 126 during standard or even maximum engine operation. The relatively lesser density, lesser mass, lesser tensile strength, greater brittleness, or other differing property or properties defining the disengagement features 140 inherently permits the airfoil 126 to disengage or separate at the disengagement features 140 prior to separation or disengagement at other areas of the airfoil 126, while simultaneously determining a manner in which the airfoil disengages or separates when experiencing such threshold forces. Such a manner of disengagement or separation can be defined by the geometry for the disengagement features 140. For example, the airfoil 126 can be intended to disengage or separate along the disengagement feature 140, as opposed to separation of the airfoil 126 at a position spaced from the disengagement feature 140. For example, the planar geometry of the chord-wise disengagement feature 148 can define a linear or planar extent or directionality for an intended separation or deformation in the event that a threshold force is exceeded, permitting disengagement or separation of the airfoil 126 along such a line, plane, or directionality.

In this way, when a force exceeding a particular threshold is imparted to the airfoil 126, the airfoil 126 can disengage or separate in a predetermined manner at the disengagement feature 140, which reduces or decreases overall engine impact during an event causing a force exceeding the force threshold.

Additionally, it is contemplated that different disengagement features 140 are tailored to different threshold forces. In a non-limiting example, the airfoil 126 can separate or disengage along the first and second disengagement features 142, 144 at a first threshold force, while not separating or disengaging at the angled or chord-wise disengagement features 146, 148. More specifically, the force acting upon the airfoil 126 can be such that the first or second disengagement feature 142, 144 can disengage or separate, while the force acting upon the airfoil 126 does not reach the threshold force for separation at the angled or chord-wise disengagement features 146, 148. In this way, disengagement or separation of the airfoil 126 can be tailored to the particular threshold force. Such a tailoring of the disengagement feature 140 can include position, size, material, or combinations thereof in order to determine disengagement or separation at a particular threshold, or in additional non-limiting examples, can include differences among material properties of the particular disengagement features 140, such as having a greater or lesser densities, weights, tensile strengths, or brittleness, or different materials defining the different material properties. The particular arrangement, geometry, or material (or lack thereof) utilized with the particular disengagement features 140 can be tailored to different threshold forces or different sections of the airfoil 104. In this way, different disengagement or separation scenarios can be covered within a single airfoil or component via multiple disengagement features 140. Different disengagement features 140 at different areas of the airfoil 126 can be tailored to thresholds for different amounts, types, thresholds, or directionalities of force, permitting control of deformation under different loading scenarios.

Use of the disengagement feature 140 described herein reduces the impact from the airfoil 126, engine component, or section thereof, imparted to the exterior casing (e.g., the fan casing 40 or the core casing 46) or other sections of the gas turbine engine 10 (FIG. 1) during an event resulting in forces exceeding predetermined force thresholds. More specifically, an event such as foreign debris or fan-blade out can result in impairment to the gas turbine engine 10 (FIG. 1), the surrounding environment, or components therein. Such impairment can further result in separation of components, causing a cascading series of impairment to the surrounding environment, such as to the fan casing 40 or core casing 46, as well as any components downstream of the initial event, such as compressor blades and vanes 56, 58, 60, 62 (FIG. 1) or turbine blades and vanes 68, 70, 72, 74, as well as any other portions of the surrounding environment, such as casings, disks, combustors, combustor liners, or shrouds in non-limiting examples. Therefore, a system capable of controlling deformation or separation of the airfoil 126 can provide for a reduction in cascading impairment to the surrounding environment of the gas turbine engine 10 (FIG. 1). More specifically, a controlled deformation or separation can control the mass, density, directionality, magnitude, or force of disengaged or separated portions of the airfoil 126. Such controlled deformation or separation can be controlled by way of the disengagement feature 140 that results in a lesser amount or magnitude of force imparted to the gas turbine engine 10 (FIG. 1) by the separated section of the airfoil 126, as compared to a gas turbine engine or airfoil without the disengagement feature 140. Example forces can include foreign debris, a fan-blade out event, or other unexpected forces imparted to the airfoil 126, as well as the impact force or the cascading series of events resultant thereof. Additionally, the inclusion of the disengagement features 140 having lesser density, lesser mass, lesser tensile strength, or greater brittleness can reduce overall engine weight, which can increase engine efficiency while reducing cost and fuel usage.

Usage of the disengagement features 140 can include a total number of disengagement features, an orientation thereof, or both, which is balanced with the remainder of the airfoil 126 to ensure there is limited impact to ingestion or no ingestion failure. More specifically, while the disengagement features 140 provide for disengagement of a section of the airfoil 126 at a threshold force, such disengagement features 140 and the airfoil 126 containing them can still meet minimum operational requirements for normal operation of the airfoil 126 during standard turbine engine operation. For example, the airfoil 126 can meet standard ingestion or fan-blade out requirements, while including the disengagement features 140 or even after disengagement at the disengagement feature 140.

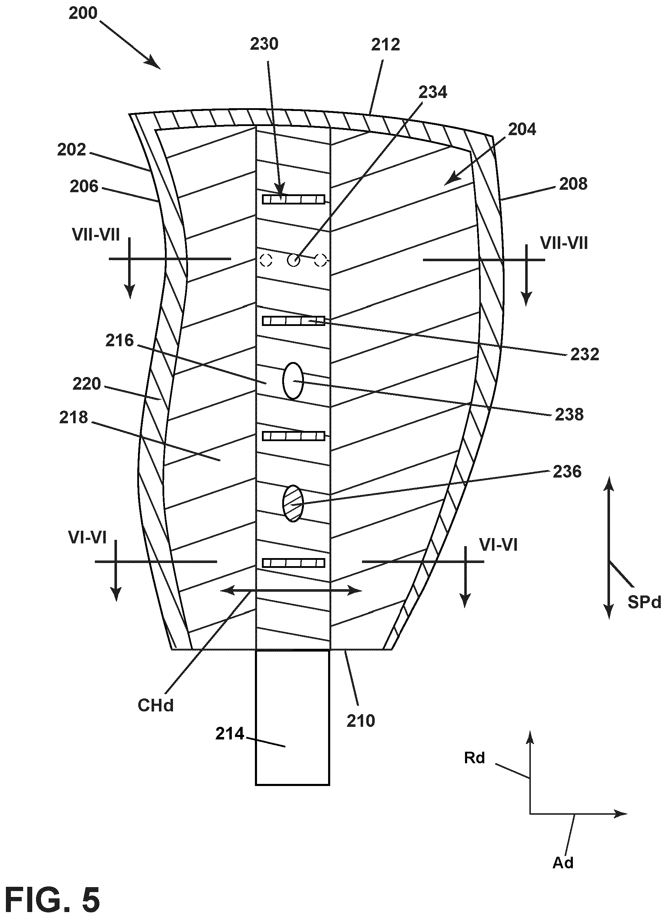

Referring now to FIG. 5, an airfoil 200 includes an outer wall 202 encasing an interior 204. The airfoil 200 includes a leading edge 206, a trailing edge 208, a root 210, and a tip 212. A shank 214 couples to the airfoil 200, extending at least partially into the interior 204. A first airfoil portion 216 of the airfoil 200 can be a spar or a spar portion extending from and coupled to the shank 214, for example, and can be sized complementary to the shank 214. The first airfoil portion 216 extends between the shank 214 and the tip 212, while any span-wise extent is contemplated. A second airfoil portion 218 is provided within the interior 204, and is positioned between the first airfoil portion 216 and a skin layer 220.

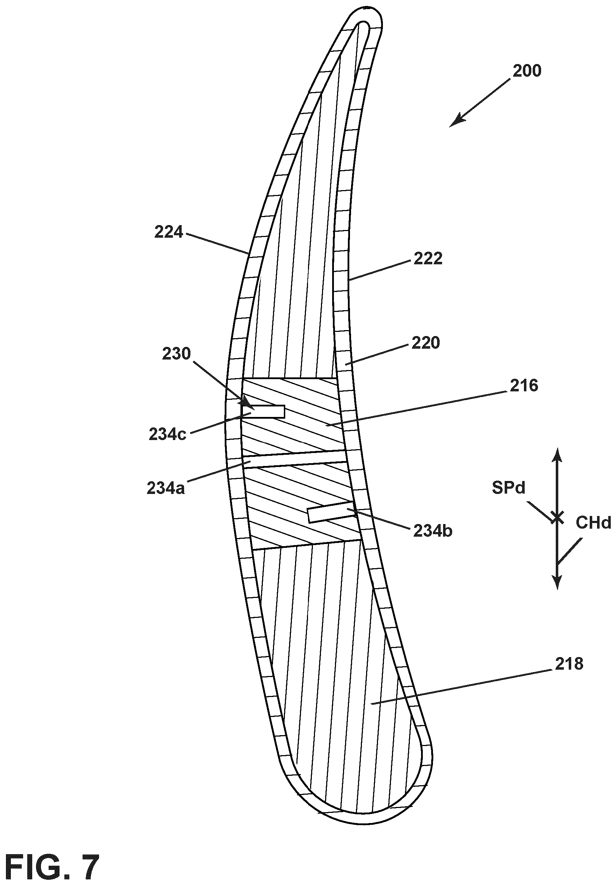

Disengagement features 230 are arranged within the first airfoil portion 216 as a set of four planar disengagement features 232, a set of recessed disengagement features 234, a filled aperture disengagement feature 236, and an open aperture disengagement feature 238. The planar disengagement features 232 are arranged at different span-wise positions between the root 210 and the tip 212, and extend in the chord-wise direction (CHd). The set of recessed disengagement features 234 can be formed as holes or recesses within the first airfoil portion 216, extending at least partially between a pressure side 222 and a suction side 224 (see FIG. 7). The set of recessed disengagement features 234 are apertures formed into the first airfoil portion 216, and can have different geometries, including but not limited to spherical, ellipsoidal, cylindrical, conic, or sections or combinations thereof, or having any cross-sectional shape, including but not limited to circular, oval, racetrack, elliptical, hyperbolic, conic, or sections or combinations thereof. The filled aperture disengagement features 236 can be generally similar to that of the set of recessed disengagement features 234, while including a material filling the filled aperture disengagement features 236, such as the same material used in the second airfoil portion 218, or other suitable materials, such as those having a lesser density, lesser mass, lesser tensile strength, or greater brittleness than that of the first airfoil portion 216 or the second airfoil portion 218. The open aperture disengagement feature 238 can be sized, shaped, or positioned similar to that of the filled aperture disengagement feature 236, while the open aperture disengagement feature 238 is provided as a single aperture, as compared to the three apertures of the set of recessed disengagement features 234. The difference among the lack of material filling the set of recessed disengagement features 234 with the material filling the filled aperture disengagement feature 236 can define different force thresholds in order to determine disengagement of the airfoil 200 at different force thresholds at different positions of the airfoil 200. In this way, the filled aperture disengagement feature 236 can be the same as or similar to the open aperture disengagement feature 238, except that the filled aperture disengagement feature 236 is filled with a material.

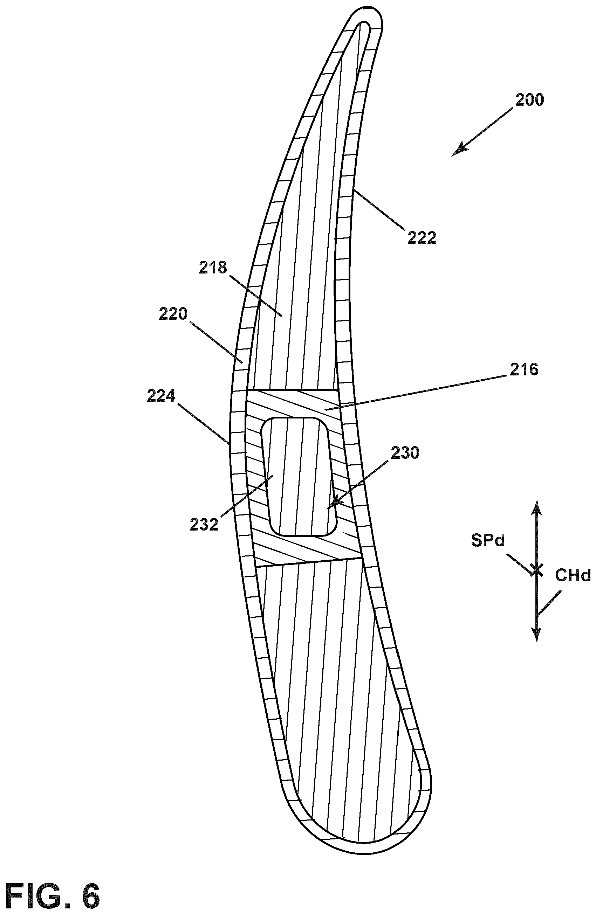

FIG. 6 shows a sectional view of FIG. 5 taken along section VI-VI, which aligns with one planar disengagement feature 232 taken along the chord-wise direction (CHd), with the span-wise direction (SPd) extending into and out of the page of FIG. 6 (represented with an "X"). The first airfoil portion 216 extends between the skin layer 220 at a pressure side 222 and a suction side 224, while the planar disengagement feature 232 is formed having a generally rectangular shape with rounded corners formed within the first airfoil portion 216. It should be appreciated that the planar disengagement feature 232 extends along a plane extending in the chord-wise direction (CHd), and has a thickness defined perpendicular thereto. The planar disengagement feature 232 extends at least partially in a direction defined extending between the pressure side 222 and the suction side 224. The planar disengagement feature 232 can define a planar area of disengagement or separation when experiencing a force. While the planar disengagement feature 232 is shown extending in the chord-wise direction (CHd) and defining a plane parallel to the chord-wise direction (CHd), it is contemplated that the plane defined by the planar disengagement feature 232 can vary from the chord-wise direction (CHd), such as extending in the span-wise direction (SPd), or can be arranged in any of the chord-wise direction (CHd), the span-wise direction (SPd), a circumferential direction perpendicular to the span-wise direction (SPd), a direction between the pressure side 222 and the suction side 224, or combinations thereof. In this way, planar disengagement or separation can be controlled in any suitable direction or orientation about the airfoil 200, existing within the three-dimensional shape of the airfoil 200, and need not be limited to only the span-wise or chord-wise directions (SPd), (CHd).

FIG. 7 shows a sectional view of FIG. 5 taken along section VII-VII, showing three recessed disengagement features 234. A first recessed disengagement feature 234a extends fully between the skin layer 220 at the pressure side 222 and the suction side 224, while a second recessed disengagement feature 234b extends from the pressure side 222 only partially toward the suction side 224, and a third recessed disengagement feature 234c extends from the suction side 224 only partially toward the pressure side 222. In this way, it should be appreciated that the disengagement features 230 can extend fully or partially between the pressure side 222 and the suction side 224, as well as extending in other directions, such as the chord-wise direction (CHd) or the span-wise direction (SPd), or various combinations thereof.

When the airfoil 200, or the disengagement features 230 as one or more of the planar disengagement feature 232, the recessed disengagement features 234, or the filled aperture disengagement features 236 experiences a force exceeding a predetermined threshold, the airfoil 200 can disengage or separate along one or more the disengagement feature 230. Different configurations (e.g., geometries, lengths, positions, materials, etc.) for the disengagement features 230 can be used to define different force thresholds at which disengagement or separation results. Additionally, the different geometries or lengths can collectively define a gradient of force thresholds across the airfoil 200, among the disengagement feature 230, where different amounts of force at each individual disengagement feature 230 can define a minimum local threshold to initial disengagement or separation among all of the disengagement features 230.

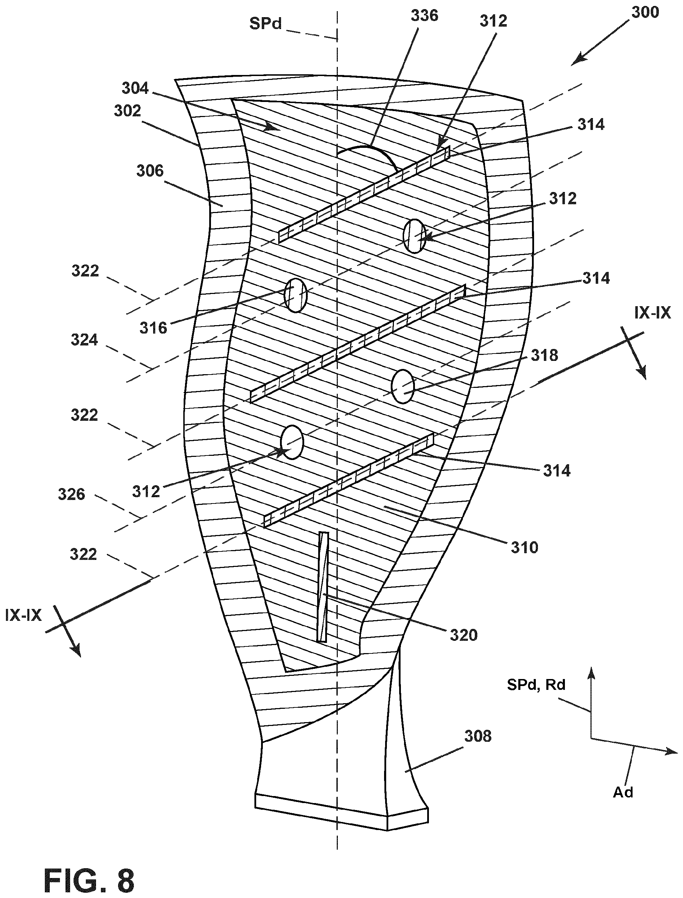

Referring to FIG. 8, an airfoil 300 includes an outer wall 302 defining an interior 304. A skin layer 306 can at least partially form the outer wall 302, and can couple to a shank 308 for mounting of the airfoil 300. A first airfoil portion 310 is provided in the interior 304 and within the space defined by the skin layer 306. The first airfoil portion 310 can be made from a composite material, which can include a specified first strength, first density, first tensile strength, or first brittleness, or combinations thereof.

Disengagement features 312 are provided within the first airfoil portion 310 as a set of angled strips 314, a set of filled apertures 316, a set of open apertures 318, and a span-wise strip 320. Utilizing multiple disengagement features can define different force thresholds for disengagement or separation of the airfoil 300 at different span-wise locations along the airfoil 300.

First axes 322 can be defined along each of the angled strips 314, with the angled strips 314 being arranged parallel to one another and defining a parallel arrangement of the first axes 322. The set of angled strips 314 can be arranged at an angle 336 relative to the radial direction (Rd), the span-wise direction (SPd), or both, and can be filled with a material having a lesser strength, lesser density, lesser tensile strength, or greater brittleness than that of the first airfoil portion 310. The angle 336 can be defined as equal to or between negative 45-degrees to 45-degrees (-45° to 45 °), while any angle from negative one-hundred eighty degrees to one hundred eighty degrees (-180° to 180°) is contemplated.

The set of filled apertures 316 can also be aligned with a similar angled orientation as that of the angled strips 314. More specifically, a second axis 324 defined through the center of at least some of the filled apertures 316 can be arranged at the angle 336. The angle 336 can be the same among the set of angled strips 314 and the set of filled apertures 316, such that orientation for the set of filled apertures 316 is the same as or matches the set of angled strips 314.

Similarly, a third axis 326 can be defined extending through the center of at least some of the apertures of the set of open apertures 318. Similar to that of the set of filled apertures 316, the third axis 326 can be arranged at the angle 336. The angle 336 for the set of open apertures 318 can be the same as that of the set of angled strips 314 and the set of filled apertures 316, such that orientation for the set of open apertures 318 is the same as that of the set of filled apertures 316 or the angled strips 314.

The span-wise strip 320 can be aligned with or parallel to the span-wise direction (SPd). Therefore, it should be appreciated that alignment of the span-wise strip 320, or any strip, can be aligned with one or more apertures of the set of filled or open apertures 316, 318 in the span-wise direction (SPd). In this way, different deformation geometries can be defined amongst the span-wise extent of the airfoil 300, such that the disengagement features 312 for the airfoil 300 can provide for multiple disengagement scenarios under different threshold forces or loadings.

It should be appreciated the disengagement features 312 are arranged in a partially patterned manner, with angled strips 314 being disposed such that at least one angled strip 314 is between the set of filled apertures 316 and the set of open apertures 318, and at least one angled strip 314 is disposed between the set of open apertures 318 and the span-wise strip 320. In one example, the spacing can be consistent between the angled strips 314 and each of the set of filled apertures 316, the set of open apertures 318, and the span-wise strip 320, while various spacing relationships can define different geometries for intended disengagement or separation at different locations.

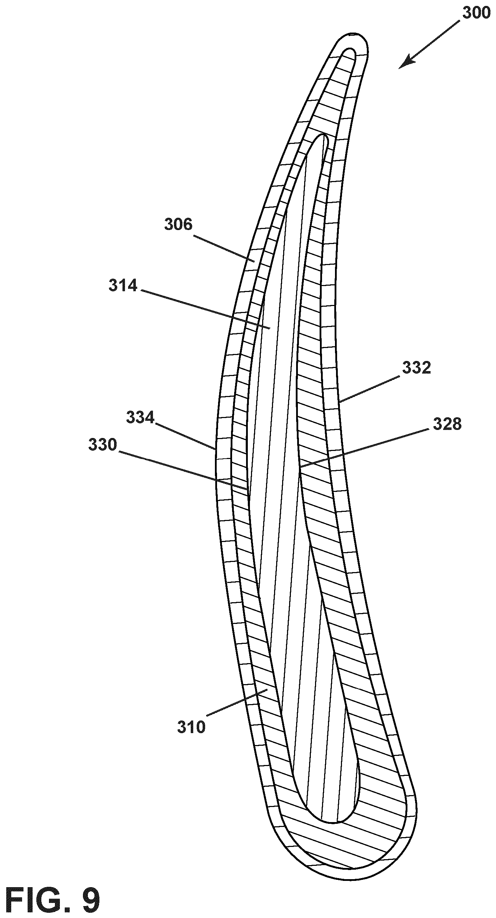

FIG. 9 shows a section view of the airfoil 300 of FIG. 8 taken along section IX-IX, which extends along one angled strip 314 of the set of angled strips 314 (FIG. 8). As can be appreciated, the angled strip 314 can be spaced from the skin layer 306 on all sides by the first airfoil portion 310. The angled strip 314 can have a shape complementary to the shape of the airfoil 300, such as including a concave surface 328 facing a pressure side 330, and including a convex surface 332 facing a suction side 334. In a non-limiting example, the complementary shape among the angled strip 314 and the shape of the airfoil 300 can be defined by a constant thickness for the first airfoil portion 310 between the angled strip 314 and the skin layer 306. In another non-limiting example, the thickness for the first airfoil portion 310 between the angled strip 314 and the skin layer 306 can vary by less than or equal to 10%, or less than or equal to 5%, while other percentages are contemplated. It should be appreciated that the complementary shape is identifiable along the angled strip 314, or defined by the first axis 322 of FIG. 8 where section IX-IX is taken, defined along the angled strip 314, such that the complementary shape of the angled strip 314 is angled within the airfoil 300.

The disengagement features 312, such as the set of angled strips 314, the set of filled apertures 316, or the set of open apertures 318 of FIGS. 8 and 9, provide for disengagement or separation of the airfoil 300 along the disengagement features 312 at a threshold force. When the airfoil 300, or a section thereof, experiences a force that meets or exceeds the threshold force, the airfoil 300 can disengage or separate along the disengagement features 312, which can reduce or decrease the overall impact to the gas turbine engine 10 (FIG. 1) which would otherwise occur without the predetermined disengagement of the airfoil 300 at the disengagement features 312. More specifically, disengagement at the disengagement feature 312 can result in less mass separated from the airfoil 300, where a lesser mass results in a lesser overall force impact to surrounding environment, or lesser cascading events resultant of the separation at the disengagement feature 312, compared to that of an airfoil without the disengagement feature 312.

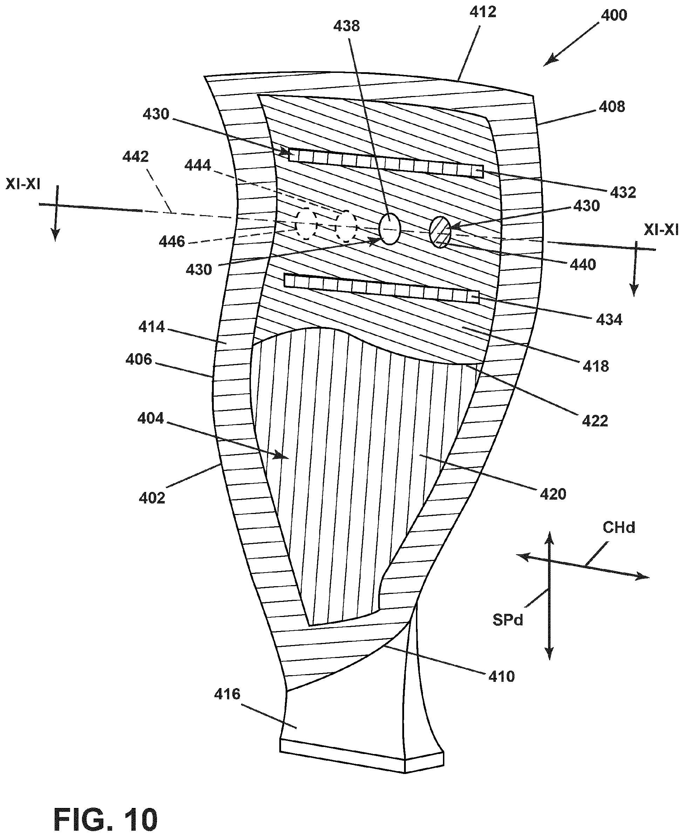

Referring to FIG. 10, an airfoil 400 includes an outer wall 402 defining an interior 404. The airfoil 400 includes a leading edge 406 and a trailing edge 408 defining a chord-wise direction (CHd) and a root 410 and a tip 412 defining a span-wise direction (SPd). A skin layer 414 can at least partially form the outer wall 402, and can couple to a shank 416 for mounting of the airfoil 400. A first airfoil portion 418 is provided in the interior 404 and adjacent to the tip 412, while a second airfoil portion 420 is provided in the interior 404 adjacent the root 410. The first airfoil portion 418 can comprise a first material and the second airfoil portion 420 can comprise a second material different than that of the first material. In a non-limiting example, the first airfoil portion 418 can be a material having a lesser density, lesser mass, or both, than that of the second airfoil portion 420. In another non-limiting example, the second airfoil portion 420 can be a spar portion, made of a material having a greater density, greater mass, or both, than that of the first airfoil portion 418. In additional non-limiting examples, the first airfoil portion 418 and the second airfoil portion 420 can be made of similar materials having similar material properties, or even the same materials. The first airfoil portion 418 meets the second airfoil portion 420 at a junction 422, which extends between the skin layer 414 at the leading edge 406 and the trailing edge 408. The junction 422 can be a curved junction that curves in the span-wise direction (SPd) or the chord-wise direction (CHd), or both, as it extends through the interior 404.

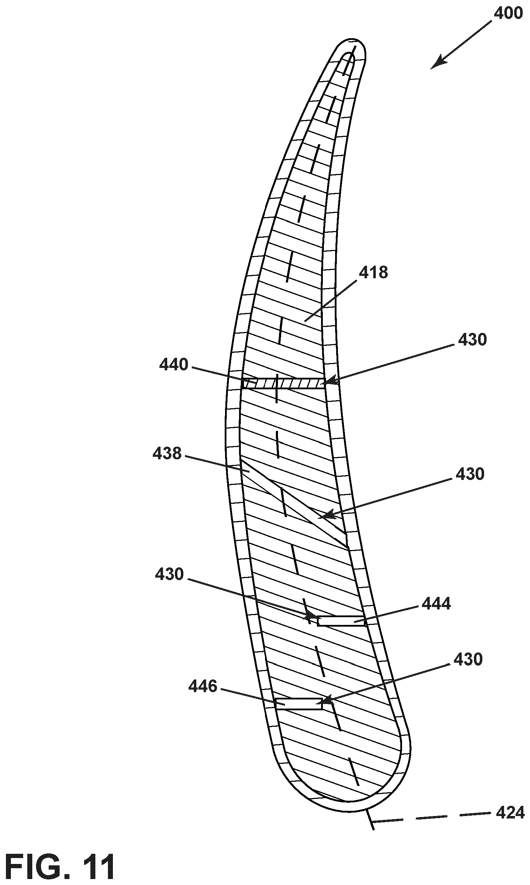

Disengagement features 430 are provided in the first airfoil portion 418 as a radially outer strip disengagement feature 432 and a radially inner strip disengagement feature 434, an open aperture disengagement feature 438, and a filled aperture disengagement feature 440. While the open and filled aperture disengagement features 438, 440 are shown as a first aperture and a second aperture, respectively, it should be appreciated that additional apertures can be included that are not visible in the section as taken, such as a third aperture disengagement feature 444 and a fourth aperture disengagement feature 446, generally illustrated in broken line in FIG. 10 and visible in the section of FIG. 11. The open and filled aperture disengagement features 438, 440 can define a first axis 442 among the center of the apertures, which can be arranged parallel to the radially outer and inner strip disengagement features 432, 434.

FIG. 11 shows a section view taken along section XI-XI of FIG. 10 that aligns with the first axis 442. A third aperture disengagement feature 444 and a fourth aperture disengagement feature 446 are visible in the section shown in FIG. 11, but are not visible in the chord-wise section of FIG. 10. The section as shown in FIG. 10 is represented by broken line 424, so that it is visually appreciable that the open and filled aperture disengagement features 438, 440 intersect the section of FIG. 10, while the third and fourth aperture disengagement features 444, 446 do not. In this way, it should be appreciated that the disengagement features 430, or a set thereof, can be arranged in three dimensions within the airfoil 400 or within the first airfoil portion 418, such as in any position among or extending in the span-wise direction, the chord-wise direction, between the pressure side and the suction side, or combinations thereof in non-limiting examples.

The disengagement features 430 of FIGS. 10-11, including the radially outer strip disengagement feature 432, radially inner strip disengagement feature 434, the open aperture disengagement feature 438, the filled aperture disengagement feature 440, the third aperture disengagement feature 444, and the fourth aperture disengagement feature 446, provide for disengagement or separation of the airfoil 400 along the disengagement features 430 at a threshold force. When the airfoil 400, or a section thereof, experiences a force that meets or exceeds the threshold force, the airfoil 400 can disengage or separate along the disengagement features 430, which can reduce or decrease the overall impact to the gas turbine engine 10 (FIG. 1) which would otherwise occur without the predetermined disengagement of the airfoil 400 at the disengagement features 312.

Aspects of the disclosure provide for a variety of benefits. The use of the disengagement features 140, 230, 312, 430 as described herein provides for disengagement of a section of an airfoil or component in a predetermined manner at a predetermined threshold force. Such disengagement at the predetermined threshold force reduces impact force imparted to the surrounding environment, such as the exterior casing like the fan casing 40 or the core casing 46 surrounding the airfoil in the turbine engine environment. Additionally, such disengagement reduces or reduces impact to the engine system downstream of the airfoil or component, decreasing or reducing the cascade of effects resultant of uncontrolled separation of the airfoil or component. Additionally, the disengagement features 140, 230, 312, 430 can include materials having lesser density, lesser mass, lesser tensile strength, or greater brittleness, or a combination thereof, than that of the other materials forming the airfoil or component, which can reduce overall weight of the component. In an airfoil for a turbine engine, the reduced weight improves overall engine efficiency.

To the extent not already described, the different features and structures of the various embodiments can be used in combination, or in substitution with each other. That one feature is not illustrated in all of the embodiments is not meant to be construed that it cannot be so illustrated. For example, the features shown in the embodiment of FIGS. 3-4, 5-7, 8-9, or 10-11 can be interchanged or intermixed with one or more other embodiments of FIGS. 3-4, 5-7, 8-9, or 10-11. Thus, the various features of the different embodiments can be mixed and matched to form new embodiments, whether or not the new embodiments are expressly described. All combinations or permutations of features described herein are covered by this disclosure. Additionally, all features can be utilized within a single airfoil, like the airfoil 104 of FIG. 2, and are not mutually exclusive.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
A gas turbine engine comprising: a fan section, a compressor section, combustion section, and turbine section in serial flow arrangement, and defining an engine centerline extending between a forward direction and an aft direction; and an airfoil provided in one of the fan section, the compressor section, or the turbine section, the airfoil comprising an outer wall defining an interior, the airfoil extending from a leading edge to a trailing edge, defining a chord-wise direction therebetween, and extending from a root to a tip, defining a span-wise direction therebetween, and including a pressure side and a suction side; a first airfoil portion positioned within the interior; at least one disengagement feature positioned within the first airfoil portion, the at least one disengagement feature having a disengagement property selected from at least one of a lesser density, a lesser mass, lesser tensile strength, or greater brittleness than that of the first airfoil portion; wherein the disengagement property for the at least one disengagement feature is adapted to disengage a section of the airfoil at the first airfoil portion in response to a force exceeding a predetermined threshold.

The gas turbine engine of any preceding clause, further comprising a second airfoil portion provided within the interior positioned adjacent the first airfoil portion.

The gas turbine engine of any preceding clause, wherein at least one of a density or a mass of the second airfoil portion is the same as that of the at least one disengagement feature.

The gas turbine engine of any preceding clause, wherein the second airfoil portion is arranged exterior of the first airfoil portion.

The gas turbine engine of any preceding clause, wherein the at least one disengagement feature is arranged within the first airfoil portion and contacts the second airfoil portion.

The gas turbine engine of any preceding clause, further comprising a skin layer at least partially defining the outer wall and surrounding the first airfoil portion.

The gas turbine engine of any preceding clause, wherein the airfoil further comprises a shank coupled to the first airfoil portion.

The gas turbine engine of any preceding clause, wherein the at least one disengagement feature is formed as at least one aperture in the first airfoil portion.

The gas turbine engine of any preceding clause, wherein the at least one aperture further comprises at least one filled aperture filled with a material having the lesser density, lesser mass, lesser tensile strength, or greater brittleness than the first airfoil portion.

The gas turbine engine of any preceding clause, wherein the at least one aperture is formed as a set of at least two apertures, wherein the set of apertures are aligned along a first axis.

The gas turbine engine of any preceding clause, wherein the at least one disengagement feature is positioned at or exterior of 20% span in the span-wise direction.

The gas turbine engine of any preceding clause, wherein the at least one disengagement feature is formed as a strip extending through the first airfoil portion.

The gas turbine engine of any preceding clause, wherein the strip is planar and aligned with one of the span-wise direction or the chord-wise direction.

The gas turbine engine of any preceding clause, wherein the strip curves in at least one of the span-wise direction and the chord-wise direction.

The gas turbine engine of any preceding clause, further comprising a skin layer exterior of the first airfoil portion, and wherein the at least one disengagement feature extends fully between the skin layer on the pressure side to the skin layer on the suction side.

The gas turbine engine of any preceding clause, wherein the at least one disengagement feature comprises multiple disengagement features in span-wise arrangement, and wherein the force for each predetermined threshold for each disengagement feature of the multiple disengagement features increase in the span-wise direction toward the root.

The gas turbine engine of any preceding clause, wherein the first airfoil portion comprises a foam or polymer material.

The gas turbine engine of any preceding clause, wherein the first airfoil portion comprises an adhesive or resin for bonding to the at least one disengagement feature.

The gas turbine engine of any preceding clause, wherein the at least one disengagement feature is co-cured or co-bonded with the first airfoil portion.

The gas turbine engine of any preceding clause, wherein the first airfoil portion is co-cured or co-bonded with at least one of the disengagement feature or the second airfoil portion.

The gas turbine engine of any preceding clause, wherein the at least one disengagement feature comprises an open cell foam, a closed cell foam, fiber reinforced foams, metal foams, composite foams, metal matrix foams, resinous foams, vinyl foams, stochastic or regular foams, ceramic foams, microcellular foams, polymer foams, or combinations thereof.

The gas turbine engine of any preceding clause, wherein the second airfoil portion comprises an open cell foam, a closed cell foam, fiber reinforced foams, metal foams, composite foams, metal matrix foams, resinous foams, vinyl foams, stochastic or regular foams, ceramic foams, microcellular foams, polymer foams, or combinations thereof.

The gas turbine engine of any preceding clause wherein a material for the second airfoil portion is the same as the material comprising the at least one disengagement feature.

The gas turbine engine of any preceding clause, wherein a material for the second airfoil portion comprises a greater density, a greater mass, a greater tensile strength, or a lesser brittleness than that of the at least one disengagement feature.

The gas turbine engine of any preceding clause, wherein the first airfoil portion is made of a composite material.

The gas turbine engine of any preceding clause, wherein the strip is arranged at a non-zero angle relative to at least one of the span-wise direction or the chord-wise direction.

The gas turbine engine of any preceding clause, wherein the non-zero angle is arranged relative to both the span-wise direction and the chord-wise direction.

The gas turbine engine of any preceding clause, wherein the at least one disengagement feature comprises a set of strips and a set of apertures, wherein the set of strips and the set of apertures are arranged in an alternating pattern extending in the span-wise direction.

The gas turbine engine of any preceding clause, wherein the set of apertures arranged between strips of the set of strips comprises at least two apertures.

The gas turbine engine of any preceding clause, wherein the at least two apertures define a second axis, and wherein the second axis is arranged parallel to at least one strip of the set of strips.

An airfoil for a turbine engine, the airfoil comprising: an outer wall, defining an interior, the airfoil extending from a leading edge to a trailing edge, defining a chord-wise direction therebetween, and extending from a root to a tip, defining a span-wise direction therebetween; a first airfoil portion positioned within the interior; at least one disengagement feature positioned within the first airfoil portion, the at least one disengagement feature having a disengagement property selected from at least one of a lesser density, a lesser mass, lesser tensile strength, or greater brittleness than that of the first airfoil portion; wherein the disengagement property for the at least one disengagement feature is adapted to disengage a section of the airfoil at the first airfoil portion in response to a force exceeding a predetermined threshold.

The airfoil of any preceding clause, further comprising a second airfoil portion positioned within the interior separating the first airfoil portion into a pressure side portion and a suction side portion.

The airfoil of any preceding clause, wherein at least one disengagement feature is provided within each of the pressure side portion and the suction side portion.

The airfoil of any preceding clause, wherein the at least one disengagement feature contacts the second airfoil portion.

The airfoil of any preceding clause, wherein the at least one disengagement feature is unitary with the second airfoil portion and extends into the first airfoil portion from the second airfoil portion.

The airfoil of any preceding clause, further comprising a second airfoil portion provided within the interior positioned adjacent the first airfoil portion.

The airfoil of any preceding clause, wherein at least one of a density or a mass of the second airfoil portion is the same as that of the at least one disengagement feature.

The airfoil of any preceding clause, wherein the second airfoil portion is arranged exterior of the first airfoil portion.

The airfoil of any preceding clause, wherein the at least one disengagement feature is arranged within the first airfoil portion and contacts the second airfoil portion.

The airfoil of any preceding clause, further comprising a skin layer at least partially defining the outer wall and surrounding the first airfoil portion.

The airfoil of any preceding clause, wherein the airfoil further comprises a shank coupled to the first airfoil portion.

The airfoil of any preceding clause, wherein the at least one disengagement feature is formed as at least one aperture in the first airfoil portion.

The airfoil of any preceding clause, wherein the at least one aperture further comprises at least one filled aperture filled with a material having the lesser density, lesser mass, lesser tensile strength, or greater brittleness than the first airfoil portion.

The airfoil of any preceding clause, wherein the at least one aperture is formed as a set of at least two apertures, wherein the set of apertures are aligned along a first axis.

The airfoil of any preceding clause, wherein the at least one disengagement feature is positioned at or exterior of 20% span in the span-wise direction.

The airfoil of any preceding clause, wherein the at least one disengagement feature is formed as a strip extending through the first airfoil portion.

The airfoil of any preceding clause, wherein the strip is planar and aligned with one of the span-wise direction or the chord-wise direction.

The airfoil of any preceding clause, wherein the strip curves in at least one of the span-wise direction and the chord-wise direction.

The airfoil of any preceding clause, further comprising a skin layer exterior of the first airfoil portion, and wherein the at least one disengagement feature extends fully between the skin layer on the pressure side to the skin layer on the suction side.

The airfoil of any preceding clause, wherein the at least one disengagement feature comprises multiple disengagement features in span-wise arrangement, and wherein the force for each predetermined threshold for each disengagement feature of the multiple disengagement features increase in the span-wise direction toward the root.

The airfoil of any preceding clause, wherein the first airfoil portion comprises a foam or polymer material.

The airfoil of any preceding clause, wherein the first airfoil portion comprises an adhesive or resin for bonding to the at least one disengagement feature.

The airfoil of any preceding clause, wherein the at least one disengagement feature is co-cured or co-bonded with the first airfoil portion.

The airfoil of any preceding clause, wherein the first airfoil portion is co-cured or co-bonded with at least one of the disengagement feature or the second airfoil portion.

The airfoil of any preceding clause, wherein the at least one disengagement feature comprises an open cell foam, a closed cell foam, fiber reinforced foams, metal foams, composite foams, metal matrix foams, resinous foams, vinyl foams, stochastic or regular foams, ceramic foams, microcellular foams, polymer foams, or combinations thereof.

The airfoil of any preceding clause, wherein the second airfoil portion comprises an open cell foam, a closed cell foam, fiber reinforced foams, metal foams, composite foams, metal matrix foams, resinous foams, vinyl foams, stochastic or regular foams, ceramic foams, microcellular foams, polymer foams, or combinations thereof.

The airfoil of any preceding clause wherein a material for the second airfoil portion is the same as the material comprising the at least one disengagement feature.

The airfoil of any preceding clause, wherein a material for the second airfoil portion comprises a greater density, a greater mass, a greater tensile strength, or a lesser brittleness than that of the at least one disengagement feature.

The airfoil of any preceding clause, wherein the first airfoil portion is made of a composite material.

The airfoil of any preceding clause, wherein the strip is arranged at a non-zero angle relative to at least one of the span-wise direction or the chord-wise direction.

The airfoil of any preceding clause, wherein the non-zero angle is arranged relative to both the span-wise direction and the chord-wise direction.

The airfoil of any preceding clause, wherein the at least one disengagement feature comprises a set of strips and a set of apertures, wherein the set of strips and the set of apertures are arranged in an alternating pattern extending in the span-wise direction.

The airfoil of any preceding clause, wherein the set of apertures arranged between strips of the set of strips comprises at least two apertures.

The airfoil of any preceding clause, wherein the at least two apertures define a second axis, and wherein the second axis is arranged parallel to at least one strip of the set of strips.

A gas turbine engine comprising: a fan section, a compressor section, combustion section, and turbine section in serial flow arrangement, and defining an engine centerline extending forward to aft; and an airfoil provided in one of the fan section, the compressor section, or the turbine section, the airfoil comprising an outer wall defining an interior, the airfoil extending from a leading edge to a trailing edge, defining a chord-wise direction therebetween, and extending from a root to a tip, defining a span-wise direction therebetween, and including a pressure side and a suction side; a first airfoil portion positioned within the interior; and at least one disengagement feature positioned within the first airfoil portion, the at least one disengagement feature having a disengagement property selected from at least one of a lesser density, a lesser mass, a lesser tensile strength, or a greater brittleness than that of the first airfoil portion; wherein the disengagement property for the at least one disengagement feature is configured to disengage a section of the airfoil at the at least one disengagement feature in response to a force exceeding a predetermined threshold.

The gas turbine engine of any preceding clause, further comprising a second airfoil portion provided within the interior positioned adjacent the first airfoil portion.

The gas turbine engine of any preceding clause, wherein at least one of a density or a mass of the second airfoil portion is the same as that of the at least one disengagement feature.

The gas turbine engine of any preceding clause, wherein the second airfoil portion is arranged exterior of the first airfoil portion.

The gas turbine engine of any preceding clause, wherein the at least one disengagement feature contacts the second airfoil portion.

The gas turbine engine of any preceding clause, further comprising a skin layer at least partially defining the outer wall and surrounding the first airfoil portion.

The gas turbine engine of any preceding clause, further comprising a shank coupled to the first airfoil portion and wherein the first airfoil portion further comprises a spar portion extending from the shank.

The gas turbine engine of any preceding clause, wherein the at least one disengagement feature comprises at least one aperture.

The gas turbine engine of any preceding clause, wherein the at least one aperture further comprises at least one filled aperture filled with a material having the disengagement property.

The gas turbine engine of any preceding clause, wherein the at least one aperture includes a set of at least two apertures.

The gas turbine engine of any preceding clause, wherein the at least one disengagement feature is positioned at or exterior of 20% span in the span-wise direction.

The gas turbine engine of any preceding clause, wherein the at least one disengagement feature is formed as a strip extending within the first airfoil portion.

The gas turbine engine of any preceding clause, wherein the strip is planar and aligned with one of the span-wise direction or the chord-wise direction.

The gas turbine engine of any preceding clause, wherein the strip curves in at least one of the span-wise direction or the chord-wise direction.

The gas turbine engine of any preceding clause, further comprising a skin layer exterior of the first airfoil portion, and wherein the at least one disengagement feature extends fully between the skin layer on the pressure side to the skin layer on the suction side.

An airfoil for a turbine engine, the airfoil comprising: an outer wall defining an interior, the airfoil extending from a leading edge to a trailing edge defining a chord-wise direction therebetween, and extending from a root to a tip defining a span-wise direction therebetween; a first airfoil portion positioned within the interior; and at least one disengagement feature positioned within the first airfoil portion, the at least one disengagement feature having a disengagement property selected from at least one of a lesser density, a lesser mass, a lesser tensile strength, or a greater brittleness than that of the first airfoil portion; wherein the disengagement property for the at least one disengagement feature is adapted to disengage a section of the airfoil at the first airfoil portion in response to a force exceeding a predetermined threshold.

The airfoil of any preceding clause, further comprising a second airfoil portion positioned within the interior and separating the first airfoil portion into a pressure side portion and a suction side portion.

The airfoil of any preceding clause, wherein the at least one disengagement feature extends at least partially within each of the pressure side portion and the suction side portion.

The airfoil of any preceding clause, further comprising a shank coupled to the first airfoil portion, and wherein the first airfoil portion is a spar portion extending from the shank.

The airfoil of any preceding clause, wherein the at least one disengagement feature is unitary with the second airfoil portion, and extends into the first airfoil portion from the second airfoil portion.

## Claims

1. An airfoil (104) for a turbine engine (10), the airfoil comprising:
an outer wall (138) defining an interior (130), the airfoil extending from a leading edge to a trailing edge defining a chord-wise direction therebetween, and extending from a root to a tip defining a span-wise direction therebetween;
a first airfoil portion (132) positioned within the interior; and
at least one disengagement feature (140) positioned within the first airfoil portion, the at least one disengagement feature having a disengagement property selected from at least one of a lesser density, a lesser mass, a lesser tensile strength, or a greater brittleness than that of the first airfoil portion;
wherein the disengagement property for the at least one disengagement feature is adapted to disengage a section of the airfoil at the first airfoil portion in response to a force exceeding a predetermined threshold.

2. The airfoil of claim 1, further comprising a second airfoil portion (134) positioned within the interior and separating the first airfoil portion into a pressure side portion and a suction side portion.

3. The airfoil of claim 2, wherein the at least one disengagement feature extends at least partially within each of the pressure side portion and the suction side portion.

4. The airfoil of claim 2 or 3, further comprising a shank (128) coupled to the first airfoil portion, and wherein the first airfoil portion is a spar portion extending from the shank.

5. The airfoil of any of claims 2 to 4, wherein the at least one disengagement feature is unitary with the second airfoil portion, and extends into the first airfoil portion from the second airfoil portion.

6. The airfoil (104) of any preceding claim, further comprising a second airfoil portion (134) provided within the interior (130) positioned adjacent the first airfoil portion (132).

7. The airfoil (104) of claim 2 or any claim dependent on claim 2, wherein at least one of a density or a mass of the second airfoil portion (134) is the same as that of the at least one disengagement feature (140).

8. The airfoil (104) of claim 2 or any claim dependent on claim 2, wherein the second airfoil portion (134) is arranged exterior of the first airfoil portion (132).

9. The airfoil (104) of claim 2 or any claim dependent on claim 2, wherein the at least one disengagement feature (142, 144) contacts the second airfoil portion (134).

10. The airfoil (104) of any preceding claim, further comprising a skin layer (136) at least partially defining the outer wall (138) and surrounding the first airfoil portion (132).

11. The airfoil (104) of any preceding claim, wherein the at least one disengagement feature (140) is positioned at or exterior of 20% span in the span-wise direction.

12. The airfoil (104) of any preceding claim, wherein the at least one disengagement feature (140) is formed as a strip (314) extending within the first airfoil portion (132).

13. The airfoil (104) of claim 12, wherein the strip (232) is planar and aligned with one of the span-wise direction (SPd) or the chord-wise direction (CHd).

14. The airfoil (104) of claim 12 or 13, wherein the strip (142, 144) curves in at least one of the span-wise direction (SPd) or the chord-wise direction (CHd).

15. The airfoil (104) of any preceding claim, further comprising a skin layer (136) exterior of the first airfoil portion (132), and wherein the at least one disengagement feature (234a) extends fully between the skin layer (136) on a pressure side (222) to the skin layer (136) on the suction side (224).
